(19) **Europäisches Patentamt**
**European Patent Office**
**Office européen des brevets**

(11) Publication number: **0 224 996 B1**

(12) # EUROPEAN PATENT SPECIFICATION

(45) Date of publication of patent specification: **18.12.91**

(51) Int. Cl.⁵: **G06K 7/10**

(21) Application number: **86307032.2**

(22) Date of filing: **12.09.86**

(54) **Laser scanning apparatus.**

(30) Priority: **21.11.85 US 800846**

(43) Date of publication of application:
**10.06.87 Bulletin 87/24**

(45) Publication of the grant of the patent:
**18.12.91 Bulletin 91/51**

(84) Designated Contracting States:
**AT BE CH DE FR GB IT LI LU NL SE**

(56) References cited:
**EP-A- 0 122 126**
**FR-A- 2 308 116**
**FR-A- 2 420 793**
**US-A- 4 028 537**
**US-A- 4 057 784**

(73) Proprietor: **METROLOGIC INSTRUMENTS, INC.**
**P.O. Box 307 143 Harding Avenue**
**Bellmawr New Jersey 08031(US)**

(72) Inventor: **Knowles, Carl Harry**
**425 East Linden Street**
**Moorestown New Jersey 08057(US)**

(74) Representative: **Shaw, Laurence**
**George House George Road**
**Edgbaston Birmingham B15 1PG(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to laser scanning apparatus.

Laser scanning apparatus for use at checkout counters in supermarkets and other retail establishments is gaining wide acceptance. Such apparatus is generally mounted within the counter and has a window at the top thereof through which a scanning pattern is projected. The scanning pattern is created by a laser and associated optical components which produce a plurality of scan lines which intersect in various patterns. A bar code, such as the Uniform Product Code, which is imprinted on the packaging of a product is then brought into the field of the scan pattern so that the scan pattern traverses the bar code. Light reflected off the bar code is received back through the window of the scanning apparatus by optical means and associated decoding means to provide signals indicative of the bar code. These signals can be utilised to identify the article bearing the code and provide pricing information.

In order to ensure that there are sufficient lines in the pattern to ensure that all of the bar code is traversed, thereby ensuring that the code is read accurately, previous apparatus has used various optical configurations including mirrors, prisms, and the like to fold the beam and create complex patterns, such as comb patterns, orthogonal patterns, interlaced patterns, star-like patterns.

While the known apparatus, as well as commercially available omnidirectional laser scanners, may be generally suitable for their purposes, such apparatus has been necessarily large and bulky. Accordingly, such apparatus necessarily projects a considerable distance below the top of the counter while also taking up a substantial portion of the space below the counter.

European patent publication EP-A-0122126 discloses a compact laser scanner apparatus of limited height for use in producing a scanning pattern into which a bar code can be inserted to enable reading of the bar code, the apparatus comprising a housing having a top including a window through which the scanning pattern is projected, the housing containing beam generating means, beam sweeping means and a multi-surface beam folding means.

In one aspect the invention provides apparatus as disclosed in EP-A-0122126, wherein the scanning pattern consists of first, second and third groups of scan lines, said groups intersecting one another in a common area when projected on a plane disposed approximately 45° to the plane of the window while intersecting one another in a generally triangular configuration when projected in other planes disposed between 90° and parallel to the window; and wherein the beam folding means comprises a first reflective surface disposed generally opposite to the beam sweeping means and arranged to provide a first group of scan lines; a second pair of reflective surfaces disposed laterally to one side of the first reflective surface and arranged to provide a second group of scan lines; and a third pair of reflective surfaces disposed generally laterally to the other side of the first reflecting surface and arranged to provide the third group of scan lines, one reflective surface of each pair having a longitudinal axis extending generally upwardly within the housing, the beam sweeping means being arranged to direct the beam in a horizontal direction onto the first second and third reflective surfaces thereby to produce the three groups of scan lines.

French patent publication FR-A-2308116 discloses apparatus optically similar to apparatus of the invention. However, the apparatus disclosed is considerably bulkier and deeper and no appreciation is taught of the need for a compact assembly.

The invention provides a compact, omnidirectional laser scanner apparatus which creates a scanning pattern having a sufficiently large "sweet spot" into which a bar code can be placed to enable the full decoding thereof, irrespective of its orientation.

The apparatus can be suitable for under counter applications, while still providing sufficient room for the legs of an operator to fit thereunder when seated.

The apparatus can use a relatively high power laser, while remaining within predetermined radiation limits, by virtue of the scanning pattern used.

The apparatus is simple in construction and relatively low in cost.

The invention will now be described by way of example with reference to the drawings, in which;-

Figure 1 is a perspective view of a typical checkout counter at a store incorporating a laser scanner apparatus according to the invention;

Figure 2 is a perspective view, partially in section, of the laser scanner apparatus shown in Figure 1;

Figure 3 is a top elevational view, partially in section, of the laser scanner apparatus shown in Figure 2;

Figure 4 is a sectional view taken along line 4-4 of Figure 3; and

Figures 5, 6 and 7 are plan views of the scanning pattern produced by the scanner apparatus of Figure 1 when projected on a plane and at angles of 90°, 45° and 0°, respectively, to a window of the scanner apparatus.

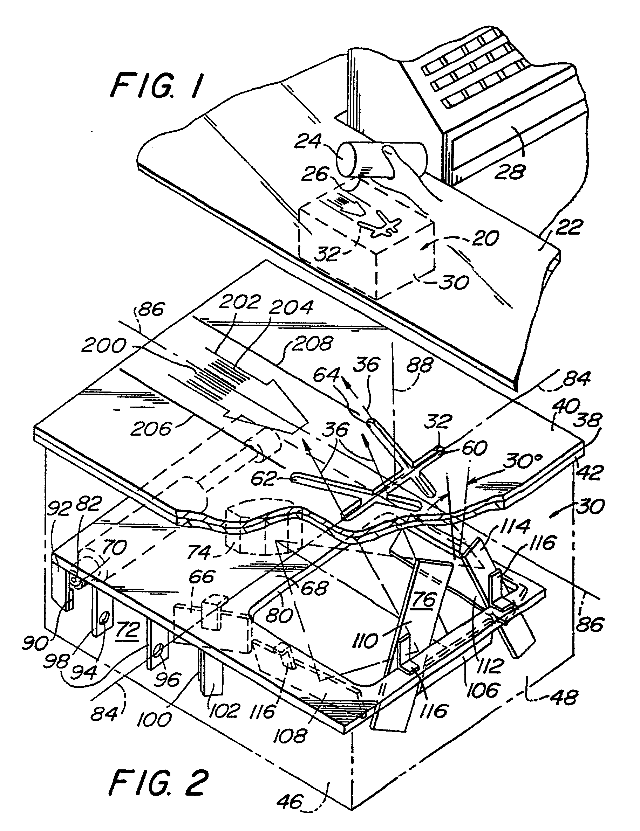

There is shown generally at 20 in Figure 1 a laser scanner apparatus in accordance with the invention. Scanner 20 is mounted under a counter 22, such as a checkout counter of a store, to project a scanning pattern through a window 32 in the counter 22 and into the space thereabove. An article, such as a food container 24, having a conventional bar code 26, such as the UPC code, printed thereon, is brought into the scanning pattern by the check-out operative, to enable the pattern to sweep across the code, whereupon light reflected off the bar code is received back by components of the scanner which process and decode the bar code bearing signal, as is conventional.

The scanning pattern of the apparatus of the invention is particularly effective in creating a "sweet spot" of large area and depth with sufficient scan lines therein to ensure that the lines sweep across the entire bar code 26 to enable the proper reading or decoding thereof, by conventional decoding means (not shown) located within the scanner 20. The decoding means is used to provide signals indicative of the decoded symbol to peripheral equipment, such as a conventional electronic cash register 28, etc.

The scanner 20 is disposed within a housing 30 which is extremely compact. In particular, the height or depth of the housing (i.e., vertical dimension) is sufficiently short, e.g. 15.24 cm (six inches) or less, to enable the device to be mounted under the counter 22 while still leaving sufficient space therebelow to enable the check-out operative to sit with his or her knees under the housing 30. This feature is of considerable importance in European countries where laws require that counter check-out operatives be seated. In addition to the short height or depth of the housing 30, it also takes up only a small area of the available counter space. Thus, the area or "footprint" of the housing 30 is less than 967.5 square cms. (150 square inches) and preferably under 774 square cms. (120 square inches).

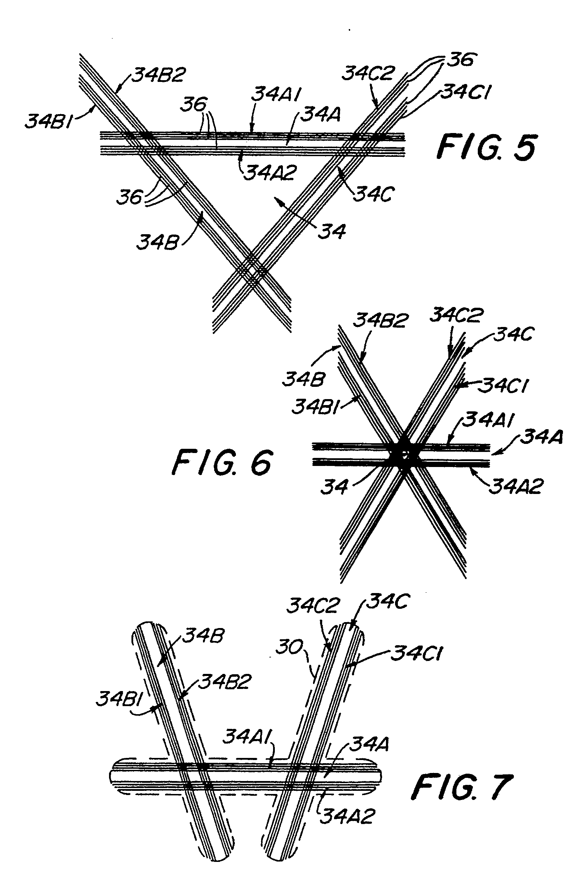

Before describing the details of the construction of the scanner 20, the scanning pattern produced thereby will be described, which pattern is shown clearly in Figures 5 to 7 and is produced within the scanner housing 30 and projected thereout through the horizontally disposed window 32. The window 32 is located on the counter 22 and will be described in detail later. The shape of the window enables the scan lines produced by the scanner 20 to pass therethrough to form a scan pattern 34 as shown in Figures 5 to 7.

The scanning pattern 34 produced by the scanner 20 is of a fixed or pre-established configuration, but such a configuration appears differently, depending upon the surface upon which it is projected. To that end, in Figure 6 the scanning pattern 34 is shown when projected on a surface disposed approximately 45° to the plane of the window 32. This 45° orientation is typical of an angle at which a bar code to be scanned is held over the window 32 by a check-out operative. In Figure 5 the pattern 34 is shown when projected on a plane disposed approximately 90° to the plane of the window 32, while Figure 7 shows the pattern 34 when projected on a plane disposed parallel to the window 32.

The scanning pattern 34 basically consists of three groups, 34A, 34B and 34C, of individual scan lines 36, the scan lines in each group being paired. Thus, each group 34A, 34B or 34C consists of at least one pair of scan lines 36 which are disposed parallel to one another, but spaced at a minimum distance (to be described later).

One preferred means for sweeping a laser beam to create the scan lines 36 making up the groups comprises a multifaceted polygon arranged for rotation about a vertical axis. Each face of the polygon is reflective, with one group of faces being inclined in the same direction and at generally the same small acute angle with respect to another group of faces and to the vertical axes to produce the paired scan lines 36 of each group in the pattern 34. However, due to manufacturing tolerances the individual faces in each group of faces of the polygon are typically slightly skewed with respect to one another, whereupon the scan lines 36 forming each pair of groups are not coincident. Thus, in practice each pair of lines of each group actually comprises a plurality of closely spaced parallel lines as shown in Figures 5 to 7. In particular in a commercial embodiment of the apparatus, the group 34A is made up of a pair of subgroups 34A1 and 34A2, the group 34B is made up of a pair of subgroups 34B1 and 34B2, and the group 34C is made up of a pair of subgroups 34C1 and 34C2. Each subgroup is in turn composed of a plurality, e.g. four, of parallel closely spaced scan lines 36. The spacing between the individual scan lines 36 making up each subgroup is a result of the manufacturing tolerances and is much less than the spacing between the subgroups of the pairs defining each group. Preferably the spacing between the subgroups of each group is approximately 6mm, for reasons to be described later.

As can be seen in Figure 6, the pattern 34 which is produced in a plane located at approximately 45° to the window 32 is of a generally symmetrical star-burst shape, with the groups 34A, 34B and 34C intersecting in a common area, and with the groups disposed at approximately 60° to one another. As shown in Figure 5 the pattern 34 which is produced in a plane disposed approximately 90° to the window 32 is of a generally equilateral triangular shape formed by the intersection of the groups 34A, 34B and 34C with one another. As shown in Figure 7 the pattern 34 produced in the plane of the window or plane disposed parallel thereto is also triangular in shape but somewhat elongated, that is, the sides formed by groups 34B and 34C are each longer than the side formed by group 34A.

The shape of the pattern 34 in planes other than 90°, 45° and 0° will be different to that shown in Figure 5, 6 or 7. Thus, the pattern 34 created between the 45° and 90° planes will become triangular in shape as the angle of the plane increases up to 90°. Similarly, the pattern also becomes triangular in shape as the angle of the plane decreases from 45° down to 0°.

The compact scanner 20 produces a relatively large volume ("sweet spot") scanning pattern 34 above the window 32. In particular, the sweet spot includes a sufficient number of intersecting scan lines to ensure that an entire bar code placed therein is traversed completely by one or more portions of the pattern. This action ensures quick, accurate and precise reading of the bar code, and without requiring the operative to place or orient the article bearing the code in a precise position with respect to the scanning pattern. Moreover, by use of a scan pattern including paired scan lines spaced by a minimum distance the scanner 20 can use a relatively high powered laser to gain the benefits of increased sensitivity and noise resistance, without exceeding applicable government regulations regarding radiation. In particular using a spacing of approximately 6mm between the paired lines forming each group of the pattern, one can use a 400 microwatt laser tube and still be within the Food and Drug Administration's CDRH requirements for a Class IIA laser device.

The scanner 20 includes additional components and means, none of which are shown, for receiving light reflected off a scanned bar code, for producing electrical signals indicative thereof, and for processing those signals to produce electrical output signals, e.g. ASCII code, for use by associated peripheral equipment, such as electronic cash registers, computers, etc.

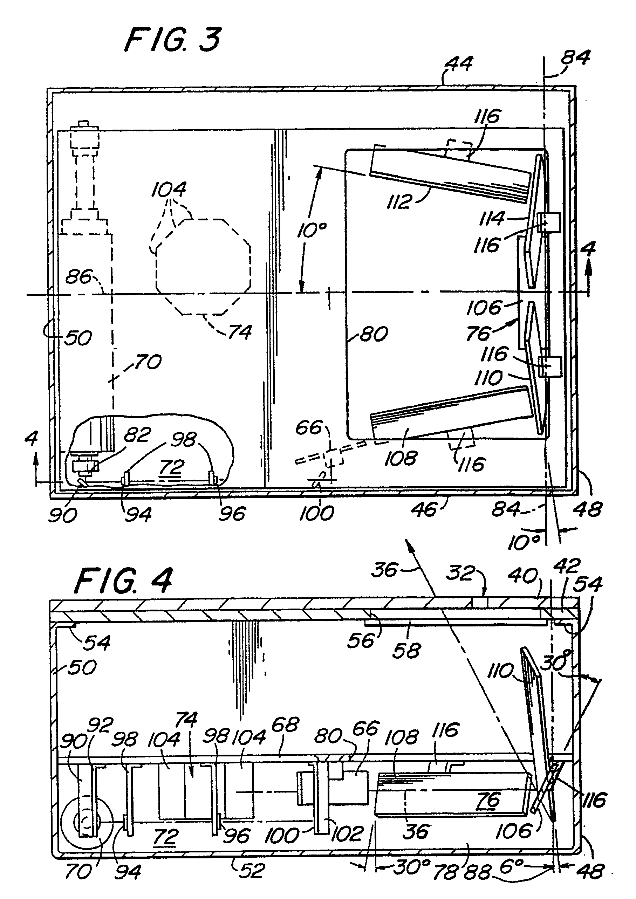

Turning now to Figures 2 to 4, it can be seen that the housing 30 comprises a top wall 38 formed by a pair of planar plates 40 and 42, a pair of planar sidewalls 44 (Figure 3) and 46, a pair of planar end walls 48 and 50 (Figure 3) and a planar bottom wall 52 (Figure 4). The sidewalls, end wall and bottom wall are all of generally rectangular shape, and are formed as an integral unit. The top edges of the sidewalls and end walls are in the form of an inwardly directed flange 54 (Figure 4) which serves as a mount for the plate 42 which is releasably secured to the flange 54 by means (not shown). As shown clearly in Figure 4, the plate 44 includes a rectangular opening 56 which serves as a window for the housing below which is a transparent protective pane 58. The plate 40 is secured on top of the plate 42 and includes three intersecting slots 60, 62 and 64 which are disposed directly over the opening 56. These slots collectively define the scan pattern window 32 discussed above, the slots 60, 62 and 64 being oriented with respect to one another in the same manner as the scan line groups 34A, 34B and 34C. As so oriented, slot 60 enables the scan lines 36 forming the scan line group 34A to exist the housing 30 therefrom, while slots 62 and 64 enable the scan lines forming the groups 34B and 34C, respectively, to exit the housing therefrom, thereby producing the complete scan pattern 34 in the space above the window.

Light reflected off the bar code held within the scanning pattern is enabled to pass back through the window 32 and into interior of the housing. This reflected light is collected by a beam collecting mirror 66 which directs the reflected light to associated sensing and signal processing means (not shown) to effect the decoding of the symbol.

The scan pattern 34 is produced by sweeping a sharply defined laser beam across various optical components located within the housing 30. These components serve to fold the beam into the desired orientations to form the lines 36 making up the pattern. The means for producing the beam, focusing it, sweeping it through the housing, folding it and directing it out of the window are all mounted on an optic bench 68 located within the lower portion of the housing 30. Those components will be described in detail later. Those components comprise a laser tube 70, beam focusing and directing means 72, a beam sweeping mechanism, such as a multifaceted rotating reflecting member 74, and beam-folding reflective members 76.

The optic bench 68, as clearly seen in Figures 2 and 4, is a generally rectangular, plate-like member which is mounted within the housing 30 parallel to the bottom wall 52. The member 68 supports the pattern forming components 70, 72, 74 and 76 in a space 78 located between the member and the bottom wall 52. The member 68 also includes a large rectangular opening or window 80 adjacent the forward end and through which the swept laser beam 36 passes.

The laser tube 70 is of a conventional steel-sheathed-ceramic construction and is mounted parallel to a transverse axis 84 of the housing. The transverse axis 84 extends through slot 60 forming a portion of the beam exit window 32 and is also perpendicular to a horizontal, longitudinal, central axis 86. The axis 86 bisects the angle formed by the two slots 62 and 64 of the window 32. A vertical axis 88 (Figure 4) extends perpendicularly to both axes 84 and 86. The laser tube 70 is arranged when provided with electric current from means (not shown) to produce a coherent beam of light which is directed out of a lens located at the end 82 of the laser tube. The laser beam impinges on a mirror 90 disposed adjacent to the end 82 of the tube 70, which mirror is mounted on the optic bench by a bracket 92 and is oriented at an angle of approximately 45° to the longitudinal axis 86, whereupon the laser beam is directed off the mirror 90 and down a path parallel to the axis 86 immediately adjacent to sidewall 46 (Figure 3). The beam then passes through a pair of lenses 94 and 96 mounted on the optic bench, via respective mounting brackets 98. The lens 94 serves to focus the beam into a sharp, clearly defined circle. The lens 96 serves to enlarge the circular beam to the desired cross sectional area. The now properly sized beam passes to a second mirror 100 mounted on the optic bench via a bracket 102. The mirror 100 extends at an acute angle to the axis 86 to direct the laser beam to the multifaceted reflecting member 74.

The beam sweeping device is shown as multifaceted reflecting member 74 and comprises a mirrored polygon which is arranged to be rotated by motor means (not shown) about a vertical axis parallel to axis 88. Other beam sweeping devices, such as an oscillating mirror, can be used instead of the rotating polygon. In the embodiment shown the polygon 74 is an octagon, with each of its eight faces 104 being a planar, mirrored reflecting surface. As can be seen in Figure 3 the eight faces 104 each extend at the same angle to one another when measured in a horizontal plane. However, the faces are alternatively grouped so that one group is skewed at a slightly different very small angle with respect to the alternate group when measured from the vertical axis. The skewed orientation of the alternating faces of the two groups creates the paired subgroupings with the desired 6mm spacing therebetween as described. The movement of each face 104 about the vertical axis around which the polygon 74 rotates causes the beam reflecting thereoff to sweep linearly to create a scan line 36. The scan line 36 is directed to the mirrored reflecting surfaces 76 which serve to fold the swept line and direct it out through the window 32 in the desired orientation to form a portion of the scan pattern 34.

The details of the reflecting means 76 will now be described. As can be seen, the reflecting means 76 comprises a first reflecting surface 106, a pair of second reflecting surfaces 108 and 110, and a pair of third reflecting surfaces 112 and 114, all of which are elongate planar mirrors mounted on the optical bench immediately adjacent the window 80 via respective mounting brackets 116.

As can be seen clearly in Figures 3 and 4, the mirrored reflecting surface 106 is mounted so that its longitudinal axis is parallel to the transverse axis 84, while being centered with respect to the longitudinal axis 86. The mirror 106 is angled upward at an angle of approximately 30° to the vertical axis 88. The mirror 108 is mounted so that it extends at approximately 10° to the longitudinal axis 86 (see Figure 3) while being angled upward at approximately 30° with respect to vertical axis 88 (see Figure 4). The mirror 112 is constructed identically to mirror 108 and is disposed opposite thereto but oriented as a mirror image with respect to the mirror 108. Accordingly, mirror 112 also extends at an angle of approximately 10° to the logitudinal axis 86, while being tilted upward at an angle of approximately 30° to the vertical axis 88. The mirror 110 is mounted laterally of the mirror 106 and with a major portion thereof extending above mirror 106 and through window 80 in the optic bench 68. The mirror 110 is tilted backward with respect to the vertical axis at an angle of approximately 6° (see Figure 4) while being tilted at approximately 10° with respect to the transverse axis 84. The longitudinal axis of the mirror 110 extends at an angle of approximately 30° to the vertical axis 88. The mirror 114 is identical to mirror 110 and is disposed opposite thereto but oriented as a mirror image with respect to mirror 110 so that it extends at an angle of approximately 6° with respect to the vertical axis and 10° with respect to the transverse axis, while its longitudinal axis extends at approximately 30° to the vertical axis.

The angled mirrors 108 and 110 form the scan lines 36 making up group 34B. To that end, the rotation of the polygon 74 causes the beam 36 to sweep the length of the mirror 108 from a point closest to the polygon 74 to a point remote from the polygon. That beam reflects off mirror 108 onto mirror 110 which serves to fold the beam and direct it out through slot 62 of window 32, thereby forming one line 36 of the group 34B. After the beam 36 sweeps off the end of mirror 108 remote from the polygon, it sweeps onto mirror 106 at a point closest to mirror 108. The beam then sweeps across, that is, down the length of the mirror 106. The angled orientation of the mirror 106 directs the beam 36 upward and out through slot 60 of the window 32 to form one scan line of group 34A. After the beam sweeps off mirror 106 it then begins sweeping across mirror 112 from a point remote from the polygon to a point closest to the polygon. This beam section is then reflected off mirror 112 onto mirror 114 and out through slot 64 to form one scan line 36 of the group 34C.

The scanning process is carried out by the rotation of a single face of the polygon 74 about its axis to produce a single scan line 36 in each of the sections 34A, 34B and 34C. The next polygon face 104 upon which the beam from mirror 100 is directed creates the next scan line 36 of each of the groups of the pattern. Because the faces of the polygon are in the skewed groups, as described, the next succeeding line 36 of the pattern is spaced from the previous line by approximately 6mm.

In order to expedite the scanning process, i.e. to maximize what is referred to in the art at the "first pass read rate," the top plate 40 forming the top 38 of the housing 30 includes guide indicia 200 thereon. The indicia is provided to direct operatives to move the bar code to be scanned into the sweet spot of the scanning pattern. To that end the indicia comprises a stylized arrow 202 including bar code 204 located between a pair of parallel guide lines 206 and 208 which extend parallel to the longitudinal axis 86 toward the slots 62 and 64 respectively. Thus, as shown in Figure 1 an operative orients the package 24 bearing the bar code 26 so that the code is pointed somewhat downward and toward the stylized bar code 204 on the scanner 20 and then moves the package in the direction of the arrow 202 between the guide lines 206 and 208 over the window 32.

The scanner described is a compact device suitable for high performance use in counter mounted applications. In particular, the scanner is of considerable utility in medium volume retail environments such as in drug and convenience stores and medium volume food markets. Because of the advanced optical design and simplified mechanics, the scanner provides powerful scanning capabilities in an inexpensive arrangement. In particular, the scanner is housed within a spacesaving, lightweight unit making installation convenient and inexpensive. Morever, the scanner can be installed in existing counters without expensive remodeling and is suitable for removal from the counter in minutes for servicing. The scanner features flush mounting and a gateless construction to accommodate bulky or flat merchandise and to maximise counter surface usage. The short height leaves ample legroom for seated point-of-sales stations and storage. The scan pattern created by the unit permits 15.25 cm. (six inch) wide scanning and a 15.25 cm. (six inch) depth of field. Because of the short height of the scanner, it can be utilized directly on top of a counter in some applications, e.g. in applications where there is no space at all below the counter.

In the preferred embodiment the scanner requires less than 30 watts of power and generates considerably less heat than comparable scanners.

## Claims

1. A compact laser scanner apparatus of limited height for use in producing a scanning pattern into which a bar code can be inserted to enable reading of the bar code, the apparatus comprising a housing (30) having a top (40,42) including a window (32) through which the scanning pattern is projected, the housing containing beam generating means (70), beam sweeping means (74) and a multi-surface beam folding means (76), wherein the scanning pattern consists of first, second and third groups (34A,34B,34C) of scan lines, said groups intersecting one another in a common area when projected on a plane disposed approximately 45° to the plane of the window (32) while intersecting one another in a generally triangular configuration when projected in other planes disposed between 90° and parallel to the window (32); and wherein the beam folding means (76) comprises a first reflective surface (106) disposed generally opposite to the beam sweeping means (74) and arranged to provide a first group of scan lines (34A); a second pair of reflective surfaces (108,110) disposed laterally to one side of the first reflective surface (106) and arranged to provide a second group of scan lines (34B); and a third pair of reflective surfaces (112,114) disposed generally laterally to the other side of the first reflecting surface (106) and arranged to provide the third group of scan lines (34C), one reflective surface (110 , 114) of each pair (108,110,112,114) having a longitudinal axis extending generally upwardly within the housing, the beam sweeping means (74) being arranged to direct the beam in a horizontal direction onto the first (106) second (108,110) and third (112,114) reflective surfaces thereby to produce the three groups of scan lines.

2. Apparatus as claimed in Claim 1, characterised in that the beam sweeping means (74) comprises a rotary polygonal member (74) having a plurality of planar reflecting surfaces (104).

3. Apparatus as claimed in Claim 2, characterised in that at least one of the reflecting surfaces (104) of the polygonal member (74) is inclined with respect to another of the surfaces (109) when measured with respect to the rotational axis (88) whereby each of the three groups of scan lines (34A, 34B, 34C) comprises a pair of spaced parallel scan lines (36).

4. Apparatus as Claimed in Claim 3, characterised in that the first reflecting surface (106) is tilted at an angle of approximately 30° to the axis (88).

5. Apparatus as claimed in Claim 4, characterised in that the second pair of reflecting surfaces (108,110) is tilted toward the beam sweeping means (74) at an angle of approximately 6° to the axis (88) and at an angle of approximately 10° to a transverse axis (84) of the housing (30).

6. Apparatus as claimed in Claim 1, characterised in that each of the groups (34A, 34B, 34C) of scan lines (36) comprises a pair of spaced parallel scan lines (36).

7. Apparatus as claimed in Claim 3 or Claim 6, characterised in that the spacing between the pair of scan lines (36) in each group (34A, 34B, 34C) is approximately 6mm.

8. Apparatus as claimed in any preceding Claim, characterised by indicia on the top (40,42) of housing (30) for facilitating proper placement of the bar code (26) with respect to the window (32).

9. Apparatus as claimed in any preceding Claim, characterised in that the housing (30) takes up an area of no greater than approximately 968 cm² (150 inches²).

**Revendications**

1. Un appareil compact de balayage laser de hauteur limitée utilisé pour produire un diagramme de balayage dans lequel peut être placé un code à bâtonnets pour en lire le code, cet appareil comprenant un logement (30) avec un dessus (40, 42) comportant une fenêtre (32) au travers de laquelle le diagramme de balayage est projeté, le logement contenant un moyen de génération de faisceau (70), un moyen de balayage du faisceau (74) et un moyen de pliage du faisceau à surfaces multiples (76), caractérisé en ce que le diagramme de balayage consiste en un premier, second et troisième groupe (34A, 34B, 34C) de lignes de balayage, lesdits groupes s'entrecoupant les uns avec les autres dans une surface commune lorsqu'ils sont projetés sur un plan disposé à environ 45° du plan de la fenêtre (32) tandis qu'ils s'entrecoupent les uns avec les autres dans une configuration généralement triangulaire lorsqu'ils sont projetés dans d'autres plans disposés entre 90° et le plan parallèle à la fenêtre (32); en ce que le moyen de pliage du faisceau (76) comprend une première surface réfléchissante (106) généralement disposée en face du moyen de balayage du faisceau (74) et placée de manière à produire un premier groupe de lignes de balayage (34A); une deuxième paire de surfaces réfléchissantes (108, 110) disposées latéralement à l'un des côtés de la première surface réfléchissante (106) et placées de manière à produire un deuxième groupe de lignes de balayage (34B); et une troisième paire de surfaces réfléchissantes (112, 114) généralement disposées latéralement à l'autre côté de la première surface réfléchissante (106) et placées de manière à produire le troisième groupe de lignes de balayage (34C), une surface réfléchissante (110, 114) de chaque paire (108, 110, 112, 114) ayant son axe longitudinal orienté généralement vers le haut à l'intérieur du logement, le moyen de balayage du faisceau (74) étant placé de manière à diriger le faisceau dans une direction horizontale sur les première (106), deuxième (108, 110) et troisième (112, 114) surfaces réfléchissantes produisant ainsi les trois groupes de lignes de balayage.

2. Un appareil selon la revendication 1, caractérisé en ce que le moyen de balayage du faisceau (74) comprend un élément polygonal (74) comptant une pluralité de surfaces planaires réfléchissantes (104).

3. Un appareil selon la revendication 2, caractérisé en ce qu'au moins l'une des surfaces réfléchissantes (104) de l'élément polygonal (74) est inclinée par rapport à une autre surface (109) en se référant à l'axe de rotation (88), de sorte que chacun des trois groupes de lignes de balayage (34A, 34B, 34C) comprend une paire de lignes de balayage parallèles espacées (36).

4. Un appareil selon la revendication 3, caractérisé en ce que la première surface réfléchissante (106) est inclinée à un angle d'environ 30° par rapport à l'axe (88).

5. Un appareil selon la revendication 4, caractérisé en ce que la deuxième paire de surfaces réfléchissantes (108, 110) est inclinée vers le moyen de balayage du faisceau (74) à un angle d'environ 6° par rapport à l'axe (88) et à un angle d'environ 10° par rapport à un axe transversal (84) du logement (30).

6. Un appareil selon la revendication 1, caractérisé en ce que chaque groupe (34A, 34B, 34C) de lignes de balayage (36) comprend une paire de lignes de balayage parallèles espacées (36).

7. Un appareil selon la revendication 3 ou 6, caractérisé en ce que l'espacement entre les deux lignes de balayage (36) de chaque groupe (34A, 34B, 34C) est d'envison 6mm.

8. Un appareil selon l'une quelconque des revendications précédentes, caractérisé par des indices sur le dessus (40, 42) du logement (30) facilitant le placement correct du code à bâtonnets (26) par rapport à la fenêtre (32).

9. Un appareil selon l'une quelconque des revendications précédentes, caractérisé en ce que le logement (30) n'occupe qu'une surface d'environ 968 cm² (150 pouces²) maximum.

**Patentansprüche**

1. Kompakte Laserabtastvorrichtung mit begrenzter Höhe zur Verwendung bei der Erzeugung eines Abtastmusters, in welches ein Balkenkode eingebracht werden kann, um das Ablesen des Balkenkodes zu ermöglichen, wobei die Vorrichtung ein Gehäuse (30) mit einem Oberteil (40, 42) einschließlich eines Fensters (32) umfaßt, durch welches das Abtastmuster projiziert wird, wobei das Gehäuse ein Strahlerzeugungsmittel (70), ein Strahlablenkmittel (74) und ein mehrflächiges Strahl-Faltmittel (76) enthält, dadurch gekennzeichnet, daß das Abtastmuster aus ersten, zweiten und dritten Gruppen (34A, 34B, 34C) von Abtastzeilen besteht, wobei sich die besagten Gruppen in einem gemeinsamen Bereich schneiden, wenn sie auf einer Ebene projiziert werden, die annähernd 45° zur Ebene des Fensters (32) angeordnet ist, während sie sich in einer im allgemeinen dreieckigen Anordnung schneiden, wenn sie in anderen zwischen 90° und parallel zum Fenster (32) angeordneten Ebenen projiziert werden; daß das Strahl-Faltmittel (76) eine im allgemeinen dem Strahlablenk-mittel (74) gegenüber angeordnete erste reflektive Fläche (106), die zur Bereitstellung einer ersten Gruppe von Abtastzeilen (34A) angeordnet ist; ein zweites Paar seitlich an einer Seite der ersten reflektiven Fläche (106) angeordneter reflektiver Flächen (108, 110), die zur Bereitstellung einer zweiten Gruppe von Abtastzeilen (34B) angeordnet sind; und ein drittes Paar im allgemeinen seitlich der anderen Seite der ersten reflektierenden Fläche (106) angeordneter reflektiver Flächen, die zur Bereitstellung der dritten Gruppe von Abtastzeilen (34C) angeordnet sind, umfaßt, wobei eine reflektive Fläche (110, 114) des jeweiligen Paars (108, 110, 112, 114) sich mit einer Längsachse innerhalb des Gehäuses allgemein nach oben erstreckt, wobei das Strahlablenkmittel (74) so angeordnet ist, daß es den Strahl in einer horizontalen Richtung auf die ersten (106), zweiten (108, 110) und dritten (112, 114) reflektiven Flächen lenkt, um damit die drei Gruppen von Abtastzeilen zu erzeugen.

2. Vorrichtung nach Anspruch 1, dadurch gekennzeichnet, daß das Strahlablenkmittel (74) ein drehbares vielseitiges Glied (74) mit einer Mehrzahl von ebenen, reflektierenden Flächen (104) umfaßt.

3. Vorrichtung nach Anspruch 2, dadurch gekennzeichnet, daß mindestens eine der reflektierenden Flächen (104) des mehrseitigen Gliedes (74) zu einer anderen der Flächen (109) geneigt ist, wenn sie in bezug auf die Drehachse (88) gemessen wird, wodurch jede der drei Gruppen von Abtastzeilen (34A, 34B, 34C) ein paar beabstandeter, paralleler Abtastzeilen (36) umfaßt.

4. Vorrichtung nach Anspruch 3, dadurch gekennzeichnet, daß die erste reflektierende Fläche (106) in einem Winkel von annähernd 30° zur Achse (88) geneigt ist.

5. Vorrichtung nach Anspruch 4, dadurch gekennzeichnet, daß das zweite Paar reflektierender Flächen (108, 110) in einem Winkel von annähernd 6° zur Achse (88) und in einem Winkel von annähernd 10° zu einer Querachse (84) des Gehäuses (30) zum Strahl-ablenkmittel (74) hin geneigt ist.

6. Vorrichtung nach Anspruch 1, dadurch gekennzeichnet, daß jede der Gruppen (34A, 34B, 34C) von Abtastzeilen (36) ein Paar beabstandeter, paralleler Abtastzeilen (36) umfaßt.

7. Vorrichtung nach Anspruch 3 oder Anspruch 6, dadurch gekennzeichnet, daß die Beabstandung zwischen dem Paar Abtastzeilen (36) in jeder Gruppe (34A, 34B, 34C) annähernd 6 mm beträgt.

8. Vorrichtung nach einem der vorhergehenden Ansprüche, gekennzeichnet durch Markierungen am Oberteil (40, 42) des Gehäuses (30) zur Erleichterung der ordnungsgemäßen Orientierung des Balkenkodes (26) zum Fenster (32).

9. Vorrichtung nach einem der vorhergehenden Ansprüche, dadurch gekennzeichnet, daß das Gehäuse (30) einen Bereich von nicht mehr als annähernd 968 cm² (150 Quadratzoll) einnimmt.

*FIG. 1*

24
26
28
32
20
30
22

*FIG. 2*

86
202 204
200
208
36 88
64 36
84
40 38
206
32
60
30°
62
42
30
92 82
114
70
116
74
66
80 68
76
86
90
72
110
98 94
96
112
84 100 102 116
106
108
48
46 116

FIG. 3

FIG. 4

FIG. 5

FIG. 6

FIG. 7